Europäisches Patentamt

European Patent Office

Office européen des brevets

(19)

(11) Veröffentlichungsnummer: **0 277 309 B1**

(12) **EUROPÄISCHE PATENTSCHRIFT**

(45) Veröffentlichungstag der Patentschrift:
30.05.90

(21) Anmeldenummer: 87117852.1

(22) Anmeldetag: 03.12.87

(51) Int. Cl.⁵: **F16K 27/04**, F16K 31/122,
F16K 3/00

(54) Schnellschluss-Absperrschieber.

(30) Priorität: 04.02.87 DE 3703303

(43) Veröffentlichungstag der Anmeldung:
10.08.88 Patentblatt 88/32

(45) Bekanntmachung des Hinweises auf die Patenterteilung:
30.05.90 Patentblatt 90/22

(84) Benannte Vertragsstaaten:
CH DE ES FR GB LI

(56) Entgegenhaltungen:
AT-B- 293 123
DE-A- 3 616 875
US-A- 3 907 248
US-A- 4 596 267

(73) Patentinhaber: Deutsche Babcock Werke
Aktiengesellschaft, Duisburger Strasse 375,
D-4200 Oberhausen 1(DE)

(72) Erfinder: Meyer, Walter, Obermeidericher Strasse 42,
D-4100 Duisburg 12(DE)
Erfinder: Mehrhoff, Willi, Ottilienstrasse 61,
D-4200 Oberhausen 1(DE)

(74) Vertreter: Müller, Jürgen, Dipl.-Ing., Deutsche Babcock
AG Lizenz- und Patentabteilung Duisburger Strasse 375,
D-4200 Oberhausen 1(DE)

ACTORUM AG

**Beschreibung**

Die Erfindung betrifft einen Schnellschluß-Absperrschieber mit den Merkmalen des Oberbegriffes des Anspruches 1.

Derartige Schnellschluß-Absperrschieber dienen dazu, im Störfall eine Rohrleitung innerhalb von wenigen Sekunden abzusperren.

Der die Absperrgarnitur über die Spindel betätigende Kolben wird durch Eigenmedium beaufschlagt, das der Leitung entnommen wird, in der der Absperrschieber angeordnet ist.

Bei einem bekannten mit Eigenmedium beaufschlagten Ventil (US–A 3 907 248 wird das Eigenmedium über eine außerhalb des Ventilgehäuses verlegte Leitung zu dem oberen und dem unteren Zylinderraum geführt. Aus der gleichen Druckschrift ist es weiterhin bekannt, durch die Wandung des auf das Ventilgehäuse aufgesetzten Zylinders eine axial verlaufende Bohrung zu führen. Diese Bohrung mündet in den oberen Zylinderraum ein und ist über eine außenliegende Leitung mit dem Ventilausgang verbunden.

Bei Schnellschluß-Absperrschiebern werden nach neueren Sicherheitsüberlegungen, außenliegende, druckführende Leitung nicht für ausreichend zuverlässig erachtet. So ist bei einen aus der Praxis bekannten Schnellschluß-Absperrschieber durch die Wand des Zylinders eine Bohrung geführt, die den Innenraum des Gehäuses mit dem Zylinderraum auf der dem Absperrorgan abgewandten Seite des Kolbens verbindet. Bei diesem Schnellschluß-Absperrschieber ist die Forderung nach dem Verzicht auf außenliegende, druckführende Leitungen erfüllt.

Jedoch würde sich in dem Gehäuse dieses Schnellschluß-Absperrschiebers bei einem Reißen der Rohrleitung ein nicht sicher definierbarer Druck einstellen. Es wäre damit nicht sichergestellt, ob dieser Druck zum Einfahren des Absperrorgans ausreichen würde.

Aus der DE–A 3 616 875 ist ein nicht als Schnellschluß-Absperrarmatur geeignetes Ventil bekannt. Der Ventilsitz dieses Ventils ist durch einen als Verschlußstück ausgebildeten Kolben verschließbar, der in einer Zylinderbohrung des Ventilgehäuses verschiebbar ist und mit Hilfe einer mit einem Antrieb versehenen Ventilspindel und mit Hilfe von Eigenmedium in Schließstellung gegen den Ventilsitz gedrückt wird. Dieses Eigenmedium wird von der Ventileingangsseite der Oberseite des Kolbens über eine durch das Ventilgehäuse geführte Bohrung zugeführt.

Der Erfindung liegt die Aufgabe zugrunde, den gattungsgemäßen Schnellschluß-Absperrschieber derart zu gestalten, daß er keine außenliegenden, druckführenden Leitungen aufweist und daß der Kolben mit Eigenmedium von stets berechenbarem Druck beaufschlagt wird.

Diese Aufgabe wird bei einem gattungsgemäßen Schnellschluß-Absperrschieber durch die kennzeichnenden Merkmale des Anspruches 1 gelöst.

Vorteilhafte Ausgestaltungen der Erfindung sind in den Unteransprüchen angegeben. Die als Bohrung durch das Gehäuse geführte Leitung ist vor äußeren Einflüssen geschützt und versorgt den oberen Zylinderraum mit Eigenmedium, dessen Druck bis auf den Druckverlust in den Bohrungen dem Eingangsdruck entspricht und somit einen berechenbaren Wert aufweist.

Ein Ausführungsbeispiel der Erfindung ist in der Zeichnung dargestellt und wird im folgenden näher erläutert. Es zeigen:

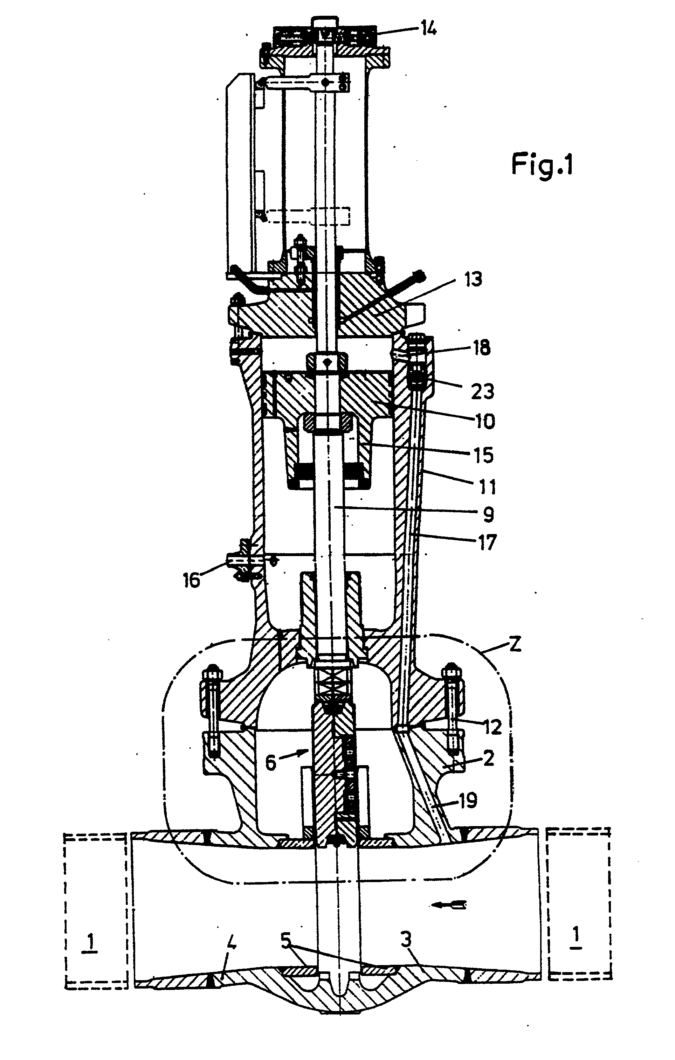

Fig. 1 einen Längsschnitt durch einen Schnellschluß-Absperrschieber gemäß der Erfindung und

Fig. 2 die Einzelheit Z nach Fig. 1 zusätzlich mit einer anderen Ausführungsform gemäß der Erfindung.

Der Schnellschluß-Absperrschieber ist in eine Rohrleitung 1 eingesetzt und weist ein Gehäuse 2 mit einem Eingangsstutzen 3 und einem Ausgangsstutzen 4 auf. In das Gehäuse 2 sind Sitzringe 5 eingeschweißt, zwischen die ein Absperrorgan 6, bestehend aus einer Dichtplatte 7 und einem Dichtring 8, eingeschoben werden kann. Das Absperrorgan 6 ist an einer Spindel 9 befestigt, die mit einem Kolben 10 verbunden ist. Der Kolben 10 ist in einem Zylinder 11 geführt, der mittels Schraubbolzen 12 als Deckel auf dem Gehäuse 2 befestigt ist.

Die Spindel 9 ist durch den oberen Deckel 13 des Zylinders 11 hindurchgeführt und oberhalb des Deckels 13 mit einer mechanischen Kupplung 14 versehen, durch die das Absperrorgan 6 in Offenstellung gehalten ist. Die Unterseite des Kolbens 10 ist mit einem Dämpfungszylinder 15 versehen. Die Oberseite des Kolbens 10 ist mit Eigenmedium beaufschlagbar, das über eine später beschriebene Leitung der Rohrleitung 1 entnommen wird. Der untere Zylinderraum ist mit einer Entlastungsleitung 16 versehen. Zur Betätigung des Absperrschiebers wird über nicht gezeigte Steuerventile der untere Zylinderraum entlastet und der obere Zylinderraum mit Eigenmedium beaufschlagt, wodurch das Absperrorgan 6 in Schließstellung fährt, nachdem die Kupplung 14 ausgerückt ist.

Durch die Wand des Zylinders 11 ist in axialer Richtung eine Bohrung 17 geführt. Die Bohrung 17 mündet über eine Querbohrung 18 in den oberen Zylinderraum und endet in der Trennfuge zwischen dem Gehäuse 2 und dem Zylinder 11. Eine weitere Bohrung 19 ist durch die Wand des Gehäuses 2 geführt und verbindet die Bohrung 17 des Zylinders 11 mit dem Eingangsstutzen 3. Diese Bohrung 19 verläuft schräg, wobei die Einmündung in den Eingangsstutzen 3 weiter von der Bewegungsrichtung der Spindel 9 entfernt liegt als die Verbindungsstelle der Bohrungen 17, 19. Die schräge Anordnung der Bohrung 19 wirkt der Injektorwirkung entgegen und begünstigt ein einwandfreies Einströmen des Mediums in die Bohrung 19. An der Verbindungsstelle der Bohrungen 17, 19 ist eine Hülse mit einer Dichtung 20 vorgesehen, die senkrecht zur Trennfuge zwischen dem Gehäuse 2 und dem Zylinder 11 liegt und die zum Inneren des Gehäuses 2 abdichtet.

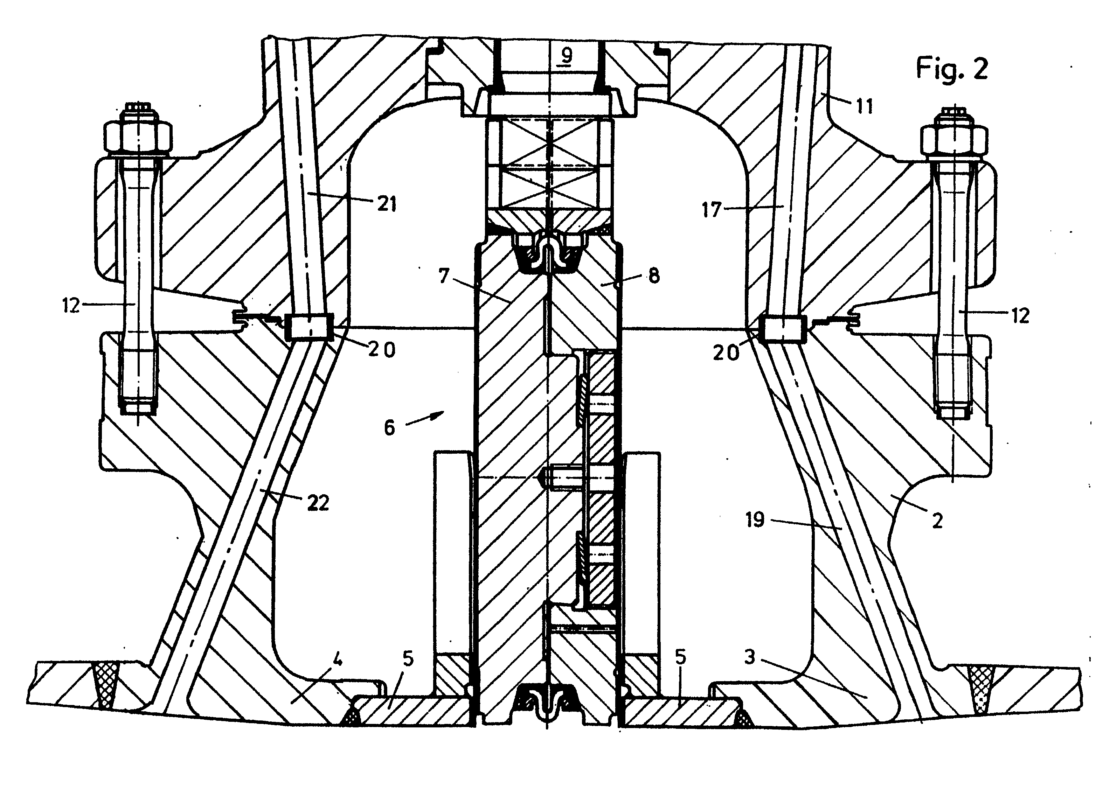

Wie zusätzlich in der Fig. 2 dargestellt ist, kann alternativ ein weiteres System aus einer durch die Wand des Zylinders 11 und einer durch die Wand des Gehäuses 2 geführten Bohrung 21, 22 vorgesehen werden. Die durch das Gehäuse 2 geführte Bohrung 22 mündet in den Ausgangsstutzen 4 und verläuft schräg zur Spindelachse. Dabei liegt das in den Ausgangsstutzen 4 mündende Ende der Bohrung 22 weiter von der Bewegungsrichtung der Spindel 9 entfernt als die Verbindungsstelle der Bohrungen 21, 22. Das System der Bohrungen 21, 22 schließt den Risikofall ein, daß die Rohrleitung 1 auf der Seite des Eingangsstutzens 3 reißen sollte, so daß das Medium von der Seite des Ausgangsstutzens 4 entnommen werden muß.

In den Bohrungen 17, 21 des Zylinders 11 sind Rückschlagventile 23 angeordnet, deren Schließrichtung jeweils der Strömungsrichtung des durch die Bohrungen 17, 21 zugeführten Mediums entgegengerichtet ist. Durch diese Rückschlagventile 23 wird verhindert, daß das Medium aus dem oberen Zylinderraum jeweils zur anderen Seite entweicht.

**Patentansprüche**

1. Schnellschluß-Absperrschieber mit einem einen Eingangsstutzen (3) und einen Ausgangsstutzen (4) aufweisenden Gehäuse (2), das durch einen als Zylinder (11) ausgebildeten Deckel geschlossen ist, in dem ein Kolben (10) geführt ist, der mit einer ein Absperrorgan (6) tragenden Spindel (9) verbunden ist, wobei der dem Gehäuse (2) abgewandte Zylinderraum mit Eigenmedium beaufschlagbar ist und der andere Zylinderraum mit einer Entlastungsleitung (16) versehen ist und durch die Wand des Zylinders (11) eine in dem Gehäuse (2) abgewandten Zylinderraum mündende Bohrung (17) geführt ist, dadurch gekennzeichnet, daß durch die Wand des Gehäuses (2) eine weitere Bohrung (19) geführt ist, die an der Verbindungsstelle von Gehäuse (2) und Zylinder (11) in die Bohrung (17) des Zylinders (11) mündet und diese mit dem Eingangsstutzen (3) verbindet und daß an der Verbindungsstelle zwischen den Bohrungen (17, 19) eine Hülse mit einer Dichtung (20) senkrecht zur Trennfuge zwischen dem Gehäuse (2) und dem Zylinder (11) angeordnet ist.

2. Absperrschieber nach Anspruch 1, dadurch gekennzeichnet, daß die Bohrung (19) des Gehäuses (2) schräg auf das dem Absperrorgan (6) abgewandte Ende des Eingangsstutzens (3) zulaufend angeordnet ist.

3. Absperrschieber nach Anspruch 1 und 2, dadurch gekennzeichnet, daß von dem Ausgangsstutzen (4) ebenfalls eine schräg durch das Gehäuse (2) geführte Bohrung (22) ausgeht, die mit einer weiteren durch die Wand des Zylinders (11) geführten Bohrung (21) verbunden ist und daß in den Bohrungen (17, 21) des Zylinders (11) jeweils ein Rückschlagventil (23) angeordnet ist.

**Revendications**

1. Soupape d'isolement à fermeture rapide comportant un carter (2), qui présente une tubulure d'entrée (3) et une tubulure de sortie (4) et qui est obturé au moyen d'un couvercle, réalisé en forme de cylindre (11) et dans lequel est guidé un piston (10) qui est relié à une broche (9) portant un organe d'isolement (6), l'enceinte cylindrique opposée au carter (2) pouvant être sollicitée par son fluide propre et l'autre enceinte cylindrique étant pourvue d'une conduite de décharge (16) et un alésage (17), qui débouche dans l'enceinte cylindrique opposée au carter (2), passant par la paroi du cylindre (11), caractérisée en ce que, dans la paroi du carter (2), est passé autre alésage (19) qui débouche dans l'alésage (17) du cylindre (11), au point de liaison du carter (2) et du cylindre (11), et qui relie celui-ci à la tubulure d'entrée (3), et en ce qu'une douille portant un joint d'étanchéité (20) est disposée au point de liaison entre les alésages (17, 19), perpendiculairement au joint de séparation entre le carter (2) et le cylindre (11).

2. Soupape d'isolement selon la revendication 1, caractérisée en ce que l'alésage (19) du carter (2) est disposé en s'achevant obliquement sur l'extrémité de la tubulure d'entrée (3) qui est éloignée de l'organe d'isolement (6).

3. Soupape d'isolement selon les revendications 1 et 2, caractérisée en ce qu'un alésage (22) passant obliquement dans le carter (2) part également de la tubulure de sortie (4) et est relié à un autre alésage (21) passant à travers la paroi du cylindre (11) et en ce qu'une soupape antiretour (23) est disposée dans chacun des alésages (17, 21) du cylindre (11).

**Claims**

1. Rapid action slide valve with a housing (2), which displays an entry nipple (3) and an exit nipple (4) and is closed off by a lid which is constructed as cylinder (11), in which a piston (10) is guided, which is connected with a spindle (9) carrying a shut-off organ (6), wherein the cylinder space remote from the housing (2) is loadable by internal medium and the other cylinder space is provided with a relief duct (16) and a bore (17), which opens into the cylinder space remote from the housing (2), is led through the wall of the cylinder (11), characterised thereby, that a further bore (19), which opens into the bore (17) of the cylinder (11) at the junction of the housing (2) and the cylinder (11) and connects the bore (17) with the entry nipple (3), is led through the wall of the housing (2) and that a sleeve with a seal (20) is arranged at the junction between the bores (17, 19) and perpendicularly to the joint between the housing (2) and the cylinder (11).

2. Slide valve according to claim 1, characterised thereby, that the bore (19) of the housing (2) is arranged to run obliquely towards that end of the entry nipple (3), which is remote from the shut-off organ (6).

3. Slide valve according to claim 1 and 2, characterised thereby, that a bore (22), which is likewise led obliquely through the housing (2) and which is connected with a further bore (21) led through the wall of the cylinder (11), goes out from the exit nipple (4) and that a respective non-return valve (23) is arranged in each of the bores (17, 21) of the cylinder (11).

EP 0 277 309 B1

Fig.1

Fig. 2

EP 0 277 309 B1